(19) Europäisches Patentamt
European Patent Office
Office européen des brevets

(11) **EP 3 007 344 A1**

(12) **EUROPEAN PATENT APPLICATION**
published in accordance with Art. 153(4) EPC

(43) Date of publication:
**13.04.2016 Bulletin 2016/15**

(51) Int Cl.:
***H02M 3/155*** *(2006.01)*

(21) Application number: **14797754.0**

(86) International application number:
**PCT/JP2014/061461**

(22) Date of filing: **23.04.2014**

(87) International publication number:
**WO 2014/185240 (20.11.2014 Gazette 2014/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.05.2013 JP 2013101593**

(71) Applicants:
• **AutoNetworks Technologies, Ltd.
Yokkaichi-shi, Mie 510-8503 (JP)**

• **Sumitomo Wiring Systems, Ltd.
Yokkaichi-shi, Mie 510-8503 (JP)**
• **Sumitomo Electric Industries, Ltd.
Osaka-shi, Osaka 541-0041 (JP)**

(72) Inventor: **NISHIMURA, Tsuguo
Yokkaichi-shi
Mie 510-8503 (JP)**

(74) Representative: **Horn Kleimann Waitzhofer
Patentanwälte PartG mbB
Ganghoferstrasse 29a
80339 München (DE)**

(54) **VOLTAGE CONVERTER**

(57) Provided is a voltage converter in which switching between step-down conversion and step-up conversion is performed seamlessly, without being affected by a voltage drop of a circuit element, and temperature change and variation of the circuit element. The voltage converter includes a step-down PWM signal generation circuit 8 that detects a difference between an output voltage obtained by subjecting an input voltage to step-down conversion, and a step-down target voltage is detected, and generates a PWM signal for use in the PWM control for a step-down switching element 2 based on the detected difference, and a step-up PWM signal generation circuit 7 that detects a difference between an output voltage obtained by subjecting the input voltage to step-up conversion, and a step-up target voltage, and generates a PWM signal for use in the PWM control for a step-up switching element 3 based on the detected difference, and means 10 for increasing the step-down target voltage, which is a target for the control by the step-down PWM signal generation circuit 8, by a predetermined amount larger than the step-up target voltage, which is a target for the control by the step-up PWM signal generation circuit 7.

FIG. 1

EP 3 007 344 A1

**Description**

Technical Field

The present invention relates to a voltage converter that subjects an input voltage to step-down conversion or step-up conversion to obtain a target voltage and outputs the obtained voltage, and includes: a step-down switching element that performs switching of the input voltage with PWM (Pulse Width Modulation) control in order to lower the input voltage; and a step-up switching element that performs switching between the input voltage and a fixed potential with the PWM control in order to increase the input voltage.

Background Art

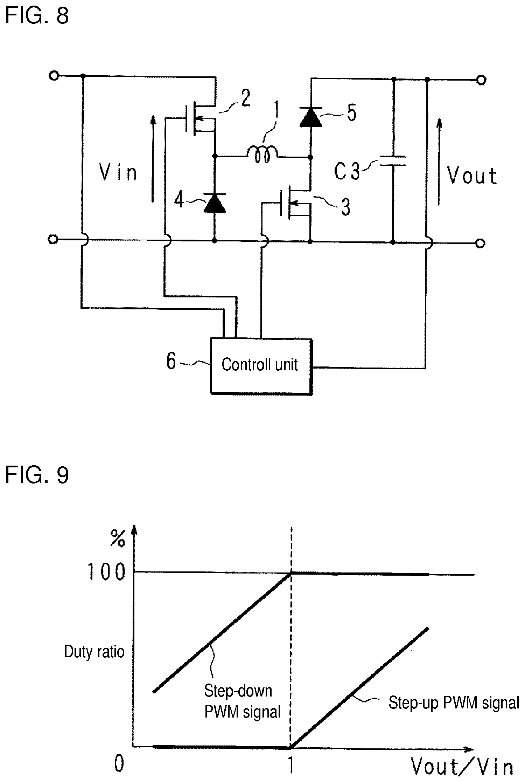

FIG. 8 is a circuit diagram illustrating an example of a configuration of a conventional voltage converter.

In this voltage converter, a DC input voltage Vin is supplied to the drain of an N-channel type MOSFET (Metal Oxide Semiconductor Field Effect Transistor) 2, and the source of the FET 2 is connected to one terminal of a coil 1 and the cathode of a diode 4. The anode of the diode 4 is grounded and the other terminal of the coil 1 is connected to the drain of an N-channel type MOSFET 3 and the anode of a diode 5.

The source of the FET 3 is grounded, the anode of the diode 5 is connected to the positive terminal of a smoothing capacitor C3, and the negative terminal of the smoothing capacitor C3 is grounded.

The FETs 2 and 3 are individually connected to a control unit 6, and are subjected to PWM control by the control unit 6.

An output voltage Vout of this voltage converter is output across the two terminals of the smoothing capacitor C3, and the input voltage Vin and the output voltage Vout are detected and read by the control unit 6.

In a voltage converter having such a configuration, the control unit 6 supplies a step-down PWM signal and a step-up PWM signal that have duty ratios as shown in FIG. 9 to the gates of the FETs 2 and 3, in order to obtain the output voltage Vout based on a desired input/output voltage ratio Vout/Vin.

That is, when the input/output voltage ratio is smaller than 1 (Vout /Vin < 1) and the input voltage Vin is to be dropped, the duty ratio of the step-down PWM signal depends on the input/output voltage ratio Vout/Vin, and the closer the input/output voltage ratio Vout/Vin is to 1, the closer the duty ratio of the step-down PWM signal is to 100%. In this case, the duty ratio of the step-up PWM signal is 0%, and the FET 3 is in the off-state.

When the input/output voltage ratio is greater than 1 (Vout/Vin > 1) and the input voltage Vin is to be boosted, the duty ratio of the step-up PWM signal depends on the input/output voltage ratio Vout/Vin, and the greater the input/output voltage ratio Vout/Vin is than 1, the greater the duty ratio of the step-up PWM signal is than 0%. In this case, the duty ratio of the step-down PWM signal is 100%, and the FET 2 is in the on-state.

Patent Document 1 discloses a power supply circuit that sets a step-down mode in which a second semiconductor switching element is normally turned off and a first semiconductor switching element is turned on/off with a predetermined on-duty, for a period in which an input voltage is much higher than an output voltage, that is, a period in which an operation amount is a given value "a" or less. A step-up mode in which the first semiconductor switching element is normally turned on and the second semiconductor switching element is turned on/off with a predetermined on-duty is set for a period in which the input voltage is much lower than the output voltage, that is, a period in which the operation amount is a given value "b" or more. A step-up and step-down mode in which the first and second semiconductor switching elements are respectively controlled with appropriate on-duties is set for a period in which a difference in potential between the input voltage and the output voltage is small, that is, a period in which the operation amount is greater than "a" and smaller than "b". Accordingly, with a simple control method, switching control based on a difference between an input voltage and an output voltage is performed.

Patent Document 2 discloses a power supply device that includes a step-down chopper transistor and a step-up chopper transistor that are connected to the same choke coil, an input voltage determination circuit that compares and determines the dimensions of the input voltage and a predetermined output voltage, and a switching circuit that selectively operates the step-down chopper transistor and the step-up chopper transistor based on an output from this input voltage determination circuit.

Citation List

Patent Documents

Patent Document 1: JP 2012-29362A

Patent Document 2: JP S62-18970A

Summary of Invention

Technical Problem

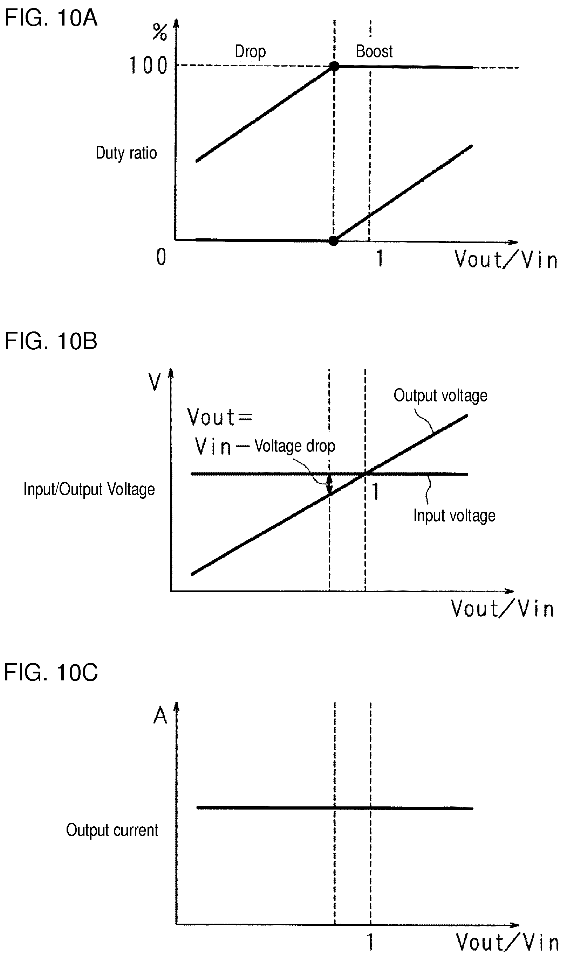

In the above-described conventional voltage converter, when, for example, step-down conversion is switched to step-up conversion, it is preferable as shown in FIG. 10A that the duty ratio of the step-up PWM signal start increasing from 0% at the same time when the duty ratio of the step-down PWM signal reaches 100%. Furthermore, at that time, it is preferable that the output voltage Vout smoothly increase as shown in FIG. 10B, and the output current continues to flow constantly (seamlessly) as shown in FIG. 10C.

Although determination of switching from step-down conversion to step-up conversion is possible by comparing the input voltage Vin with the output voltage Vout, there is the problem that a voltage drop (FIG. 10A) of the output voltage Vout that is caused by the circuit elements within the voltage converter, and temperature change and variation of the circuit element need to be taken into consideration.

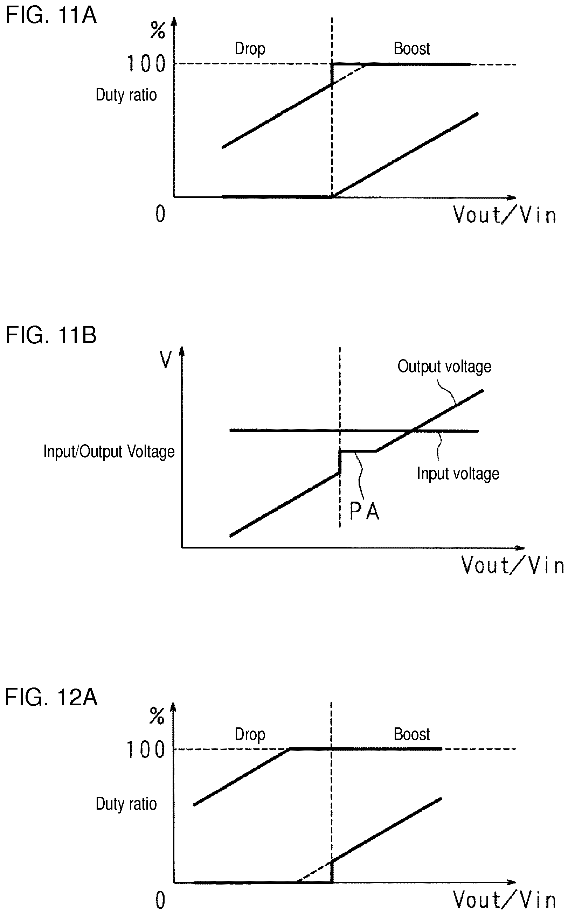

For example, if, as shown in FIG. 11A, the switching from step-down conversion to step-up conversion is performed too early, the voltage will suddenly be boosted and a portion PA in which the output voltage increases discontinuously is created, as shown in FIG. 11B.

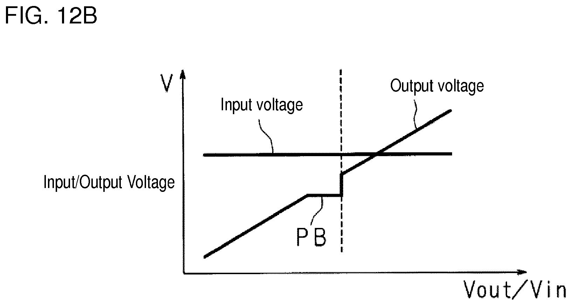

Furthermore, if, as shown in FIG. 12A, the switching from step-down conversion to step-up conversion is performed too late, the voltage boost is delayed accordingly and thus a portion PB in which the output voltage does not increase is created, as shown in FIG. 12B.

The present invention was made in view of the above-described circumstances, and it is an object of the present invention to provide a voltage converter in which switching between step-down conversion and step-up conversion is performed seamlessly, without being affected by a voltage drop of a circuit element and temperature change and variation of the circuit element at the time of the switching between step-down conversion and step-up conversion.

Solution to Problem

A voltage converter according to the present invention subjects an input voltage to step-down conversion or step-up conversion to obtain a target voltage, and outputs the obtained voltage, the voltage converter including: a step-down switching element and a step-up switching element that are respectively configured to perform, with PWM control, switching of the input voltage, and switching between the input voltage and a fixed potential in order to increase or decrease the input voltage; a step-down PWM signal generation circuit configured to detect a difference between an output voltage obtained by subjecting the input voltage to the step-down conversion and a step-down target voltage, and to generate a PWM signal for use in the PWM control of the step-down switching element based on the detected difference; a step-up PWM signal generation circuit configured to detect a difference between an output voltage obtained by subjecting the input voltage to the step-up conversion and a step-up target voltage, and to generate a PWM signal for use in the PWM control of the step-up switching element based on the detected difference; and means for making the step-down target voltage, which is a target for the control by the step-down PWM signal generation circuit, larger by a predetermined amount than the step-up target voltage, which is a target for the control by the step-up PWM signal generation circuit.

In this voltage converter, the step-down switching element and the step-up switching element, which are to perform switching, respectively perform, with PWM control, switching of an input voltage, and switching between the input voltage and a fixed potential in order to increase or decrease the input voltage, subject the input voltage to step-down conversion or step-up conversion to obtain a target voltage, and output the obtained voltage.

The step-down PWM signal generation circuit detects a difference between an output voltage obtained by subjecting the input voltage to the step-down conversion and the step-down target voltage, and generates a PWM signal for use in the PWM control of the step-down switching element based on the detected difference. The step-up PWM signal generation circuit detects a difference between an output voltage obtained by subjecting the input voltage to the step-up conversion and the step-up target voltage, and generates a PWM signal for use in the PWM control of the step-up switching element based on the detected difference. The increasing means increases the step-down target voltage, which is a target for the control by the step-down PWM signal generation circuit, by a predetermined amount larger than the step-up target voltage, which is a target for the control by the step-up PWM signal generation circuit. Accordingly, a state in which the duty ratio of the PWM signal generated by the step-up PWM signal generation circuit is larger than a lower limit, and a state in which the duty ratio of the PWM signal generated by the step-down PWM signal generation circuit is smaller than an upper limit occur at the same time.

Advantageous Effects of Invention

According to the voltage converter of the present invention, it is possible to realize a voltage converter in which switching between step-down conversion and step-up conversion is performed seamlessly, without being affected by a voltage drop of a circuit element and temperature change and variation of the circuit element at the time of the switching between step-down conversion and step-up conversion.

Brief Description of Drawings

FIG. 1 is a circuit diagram illustrating a configuration of a voltage converter according to an embodiment of the present invention.
FIG. 2 is a characteristic diagram illustrating target voltages and duty ratios of the voltage converter according to the present invention.
FIG. 3 is a diagram illustrating an operation of the voltage converter.
FIG. 4A is a diagram illustrating an operation of the voltage converter according to the present invention.
FIG. 4B is a diagram illustrating an operation of the voltage converter according to the present invention.
FIG. 4C is diagram illustrating an operation of the voltage converter according to the present invention.
FIG. 5 is a diagram illustrating an operation of the voltage converter according to the present invention.
FIG. 6 is a diagram illustrating an operation of the voltage converter according to the present invention.
FIG. 7 is a circuit diagram illustrating an internal configuration of a control unit of a voltage converter according to an embodiment of the present invention.
FIG. 8 is a circuit diagram illustrating an example of a configuration of a conventional voltage converter.
FIG. 9 is a characteristic diagram illustrating the duty ratio of the conventional voltage converter.
FIG. 10A is a diagram illustrating an example of the operation of the conventional voltage converter.
FIG. 10B is a diagram illustrating an example of the operation of the conventional voltage converter.
FIG. 10C is a diagram illustrating an example of the operation of the conventional voltage converter.
FIG. 11A is a diagram illustrating an example of the operation of the conventional voltage converter.
FIG. 11B is a diagram illustrating an example of the operation of the conventional voltage converter.
FIG. 12A is a diagram illustrating an example of the operation of the conventional voltage converter.
FIG. 12B is a diagram illustrating an example of the operation of the conventional voltage converter.

Description of Embodiments

Hereinafter, the present invention will be described with reference to the drawings illustrating embodiments thereof.

Embodiment 1

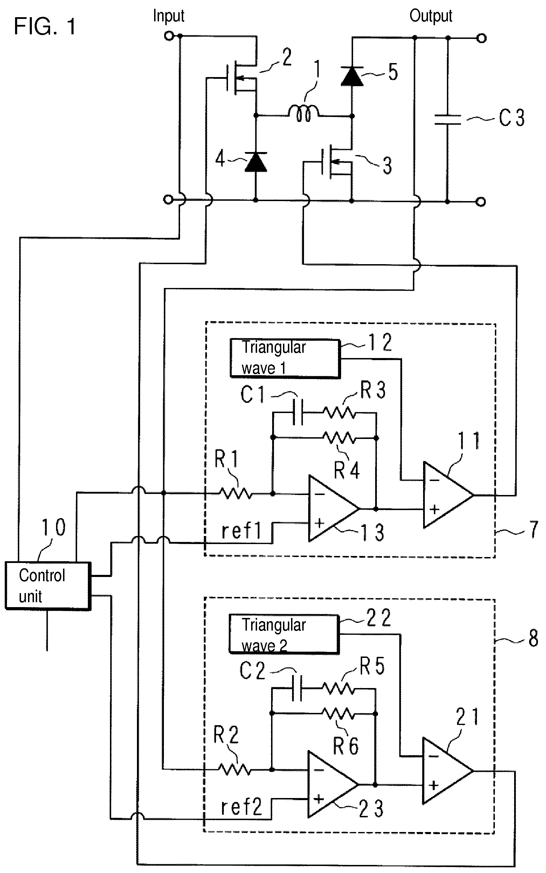

FIG. 1 is a circuit diagram illustrating a configuration of a voltage converter according to Embodiment 1 of the present invention.
In this voltage converter, a DC input voltage Vin is supplied to the drain of an N-channel type MOSFET 2, and the source of the FET 2 is connected to one terminal of a coil 1 and the cathode of a diode 4. The anode of the diode 4 is grounded and the other termination of the coil 1 is connected to the drain of an N-channel type MOSFET 3 and the anode of a diode 5.
The source of the FET 3 is grounded, and the anode of the diode 5 is connected to the positive terminal of a smoothing capacitor C3, and the negative terminal of the smoothing capacitor C3 is grounded.
The gate of the FET 2 is connected to a step-down PWM signal generation circuit 8, the gate of the FET 3 is connected to a step-up PWM signal generation circuit 7, and the FETs 2 and 3 are respectively subjected to PWM control by the step-down PWM signal generation circuit 8 and the step-up PWM signal generation circuit 7.
An output voltage Vout of the voltage converter is output across the two terminals of the smoothing capacitor C3, and the input voltage Vin and the output voltage Vout are detected and read by a control unit 10 including a microcomputer. Furthermore, the output voltage Vout is supplied to the step-down PWM signal generation circuit 8 and the step-up PWM signal generation circuit 7.
The step-up PWM signal generation circuit 7 includes an error amplifier 13 that has an inverting input terminal to which the output voltage Vout is supplied via a resistor R1 and a non-inverting input terminal to which a target voltage ref1 (step-up target voltage) is supplied from the control unit 10, and a triangular wave generator circuit 12 that oscillates and generates a triangular wave signal W1. Furthermore, a comparator 11 is provided that has an inverting input terminal to which the triangular wave signal W1 is supplied from the triangular wave generator circuit 12 and a non-inverting input terminal to which an output signal from the error amplifier 13 is supplied, and supplies an output signal to the gate of the FET 3.

A negative feedback circuit in which a resistor R4 is connected in parallel to a resistor R3 and a capacitor C1, which are connected in series, is externally added to the error amplifier 13, and the gain of the error amplifier 13 is small.

The step-down PWM signal generation circuit 8 includes an error amplifier 23 that has an inverting input terminal to which the output voltage Vout is supplied via a resistor R2 and a non-inverting input terminal to which a target voltage ref2 (step-down target voltage) is supplied from the control unit 10, and a triangular wave generator circuit 22 that oscillates and generates a triangular wave signal W2. Furthermore, a comparator 21 is provided that has an inverting input terminal to which the triangular wave signal W2 is supplied from the triangular wave generator circuit 22 and a non-inverting input terminal to which an output signal from the error amplifier 23 is supplied, and supplies an output signal to the gate of the FET 2.

A negative feedback circuit in which a resistor R6 is connected in parallel to a resistor R5 and a capacitor C2, which are connected in series, is externally added to the error amplifier 23, and the gain of the error amplifier 23 is small.

The control unit 10 controls the target voltage ref1 of the step-up PWM signal generation circuit 7 and the target voltage ref2 of the step-down PWM signal generation circuit 8 by adding a predetermined amount of difference, so that ref1 < ref2 is satisfied. However, the difference between the target voltages ref1 and ref2 is assumed to be sufficiently smaller than the crest values of the triangular wave signals W1 and W2.

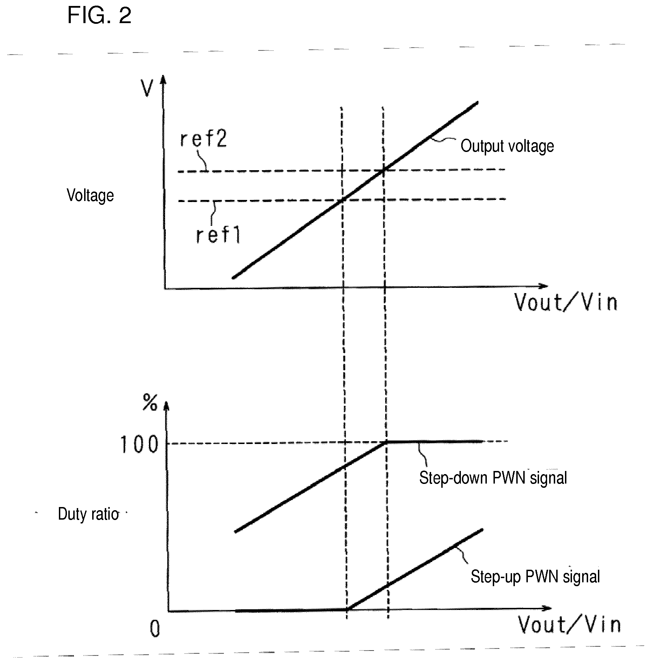

Accordingly, as shown in FIG. 2, the state in which the duty ratio of a PWM signal generated by the step-up PWM signal generation circuit 7 is greater than the lower limit (0%), and the state in which the duty ratio of a PWM signal generated by the step-down PWM signal generation circuit 8 is smaller than the upper limit (100%) occur at the same time, and in this situation in which these states are occurring, switching between step-up conversion and step-down conversion is performed.

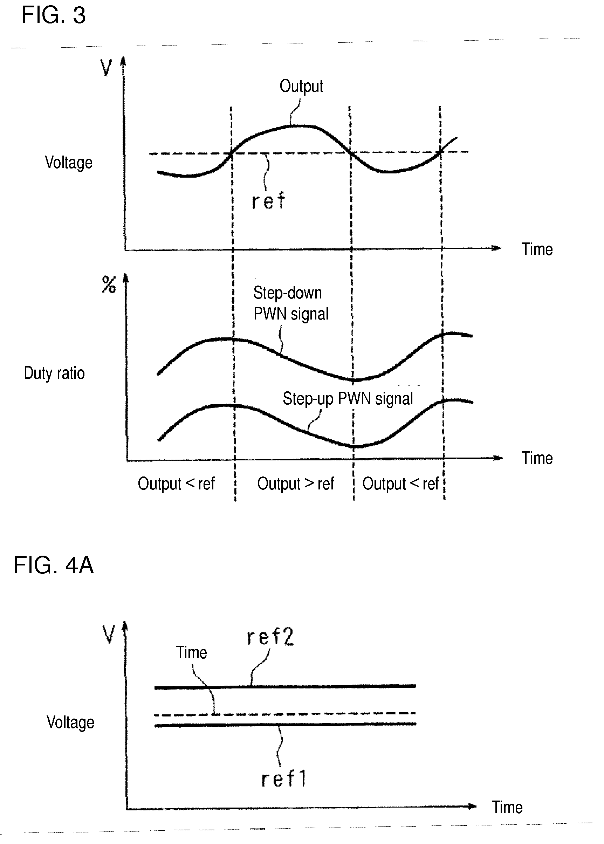

If the step-up PWM signal generation circuit 7 and the step-down PWM signal generation circuit 8 would operate individually and the target voltages ref were the same, an increase and a decrease in the duty ratios of a step-up PWM signal and a step-down PWM signal would be synchronized as shown in FIG. 3, and thus there would be the risk that both circuits wholly amplify the gain and oscillate. This oscillation can be avoided by controlling the target voltages ref1 and ref2 by adding a predetermined amount of difference, so that ref1 < ref2 is satisfied.

In the voltage converter having such a configuration, by letting the output signals of the error amplifiers 13 and 23 change with a temporal lag in response to a change in the output voltage Vout, the duty ratios of the step-up PWM signal and the step-down PWM signal change little by little.

When the output voltage Vout is higher than the target voltages ref1 and ref2, the outputs of the error amplifiers 13 and 23 decrease and the duty ratios also decrease, but in response thereto, the output voltage Vout decreases and the duty ratios are inverted and increase (before the duty ratios reach 0%, the output voltage Vout becomes lower than the target voltage and the duty ratios are inverted and increase).

When the output voltage Vout is lower than the target voltages ref1 and ref2, both the step-up PWM signal generation circuit 7 and the step-down PWM signal generation circuit 8 operate to increase the duty ratios and boost the output voltage Vout. When the output voltage Vout is higher than the target voltages ref1 and ref2, both the step-up PWM signal generation circuit 7 and the step-down PWM signal generation circuit 8 operate to decrease the duty ratios and drop the output voltage Vout.

In both cases where the output voltage Vout is lower than the target voltages ref1 and ref2, and is higher than the target voltages ref1 and ref2, the output voltage Vout changes toward the target voltages ref1 and ref2, and in both cases, the output voltage Vout is between the target voltages ref1 and ref2.

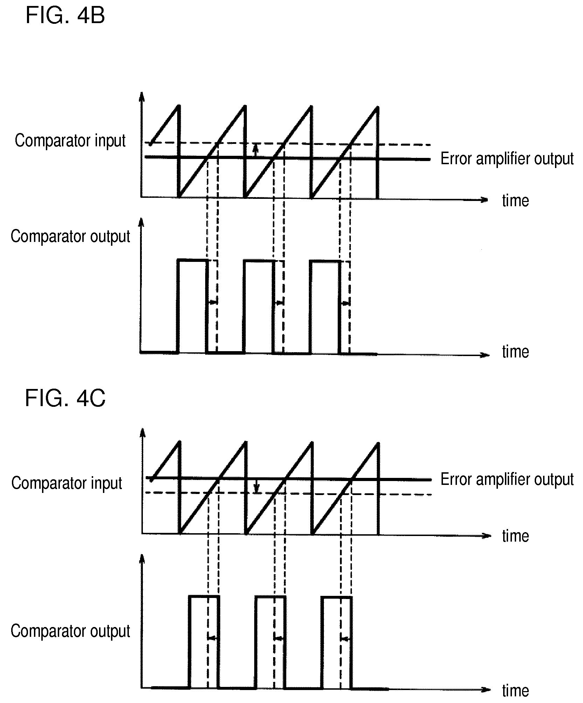

In the case where the output voltage Vout is between target voltages ref1 and ref2 as shown in FIG. 4A, if the output voltage Vout is close to the target voltage ref1, the output of the error amplifier 13 of the step-up PWM signal generation circuit 7 changes slightly but the step-down PWM signal generation circuit 8 increases the duty ratio because the output voltage Vout is lower than the target voltage ref2 (FIG. 4B). With the increase in the duty ratio of the step-down PWM signal generation circuit 8, the output voltage Vout becomes much higher than the target voltage ref1, and the step-up PWM signal generation circuit 7 decreases the duty ratio (FIG. 4C).

On the other hand, in the case where the output voltage Vout is between the target voltages ref1 and ref2 as shown in FIG. 4A, if the output voltage Vout is close to the target voltage ref2, the output of the error amplifier 23 of the step-down PWM signal generation circuit 8 changes slightly but the step-up PWM signal generation circuit 7 decreases the duty ratio because the output voltage Vout is higher than the target voltage ref1 (FIG. 4C). With the decrease in the duty ratio of the step-up PWM signal generation circuit 7, the output voltage Vout becomes much lower than the target voltage ref2, and the step-down PWM signal generation circuit 8 increases the duty ratio (FIG. 4B).

Accordingly, when the output voltage Vout is between the target voltages ref1 and ref2, increases and decreases in the duty ratios of the step-up PWM signal generation circuit 7 and the step-down PWM signal generation circuit 8 are in the opposite directions to each other.

If the gains of the error amplifiers 13 and 23 are large, continuing the operation will selectively cause the state in which the duty ratio of the step-up PWM signal generation circuit 7 decreases completely, or the state in which the duty ratio of the step-down PWM signal generation circuit 8 increases completely, converging to the step-up operation or the step-down operation depending on the dimensional relationship of the current input voltage Vin and target voltages ref1 and ref2.

If the input voltage Vin is higher than the target voltage ref2, the output voltage Vout and the target voltage ref2 are in the equilibrium state when the duty ratio of the step-up PWM signal generation circuit 7 is a lower limit (for example, 0%) and the duty ratio of the step-down PWM signal generation circuit 8 is a suitable value. The voltage converter is in the state of executing the step-down operation.

If the input voltage Vin is lower than the target voltage ref1, the output voltage Vout and the target voltage ref1 is in the equilibrium state when the duty ratio of the step-down PWM signal generation circuit 8 is at an upper limit (for example, 100%) and the duty ratio of the step-up PWM signal generation circuit 7 has a suitable value. The voltage converter is in the state of executing the step-up operation.

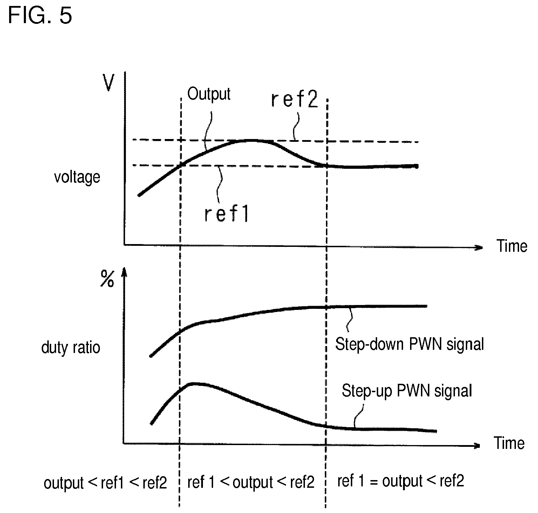

As described above, as shown in FIG. 5, when the output voltage Vout is between the target voltages ref1 and ref2, increases and decreases in the duty ratios of the step-up PWM signal and the step-down PWM signal are in the opposite directions to each other, and the output voltage Vout changes slightly (gain decrease), making it possible to prevent the voltage converter from oscillating.

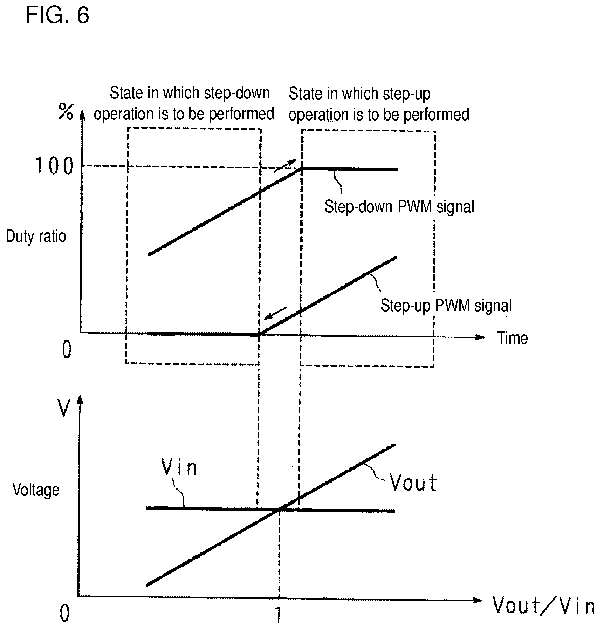

When any one of the duty ratios of the step-up PWM signal and the step-down PWM signal reaches the upper limit or the lower limit, the operation is stabilized at the output voltage Vout of the other target value, and thus, as shown in FIG. 6, it is possible to switch seamlessly between the step-down conversion and the step-up conversion.

Note that if the step-up PWM signal generation circuit 7 and the step-down PWM signal generation circuit 8 operate individually, there will be numerous combinations of the duty ratios of the step-up PWM signal and the step-down PWM signal in order to obtain a given output voltage Vout. However, this problem can be solved by setting the lower limit for the duty ratio of the step-up PWM signal to 0% and the upper limit for the duty ratio of the step-down PWM signal to 100% in the above-described method.

Assuming that the duty ratio of the step-up PWM signal is Dboost, and the duty ratio of the step-down PWM signal is Ddrop, the relationship between the input voltage Vin and the output voltage Vout is given as follows:

$$\text{Vout} = \text{Vin} \times \text{Ddrop} \times 1 / (1 - \text{Dboost})$$

$$\text{Vout} = \text{Vin} \times 2 \text{ can be obtained even when Ddrop} = 100\% \text{ and Dboost}$$

$$= 50\%, \text{ or when Ddrop} = 50\% \text{ and Dboost} = 75\%, \text{ for example.}$$

In the state in which the duty ratio is not 100% or 0%, the FETs 2 and 3 perform switching, and in such a case (50%, 75%, or the like), unnecessary switching loss occurs and it is therefore preferable that the duty ratio be 100% or 0%.

Embodiment 2

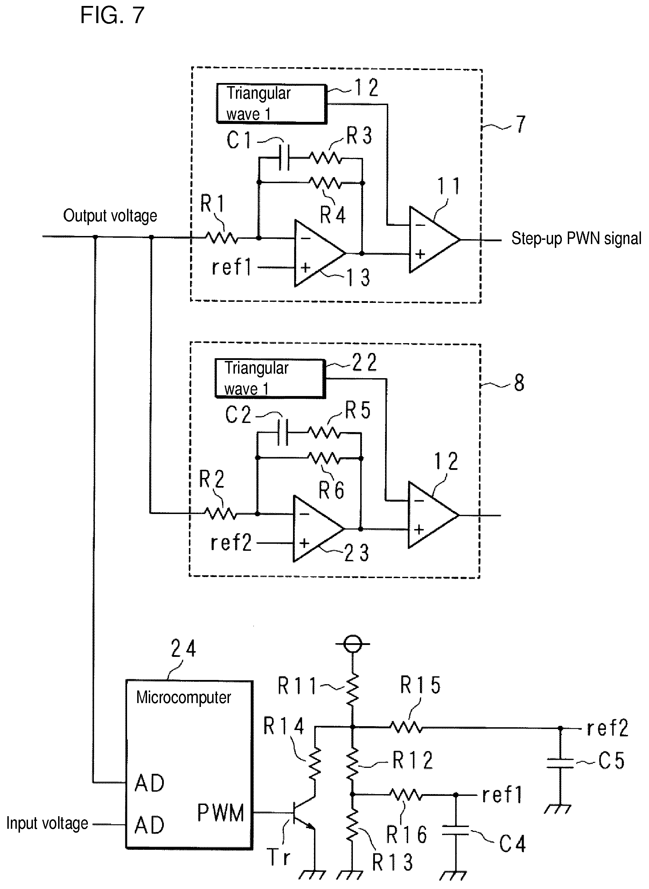

FIG. 7 is a circuit diagram illustrating an internal configuration of a control unit 10 of a voltage converter according to Embodiment 2 of the present invention.

This control unit 10 includes a microcomputer 24 that is supplied with an input voltage Vin and an output voltage Vout individually and reads them. The microcomputer 24 sets target voltages based on the read input voltage Vin and output voltage Vout, generates a PWM signal in order to obtain the target voltages, and performs switching of an NPN-type transistor Tr based on the generated PWM signal.

The emitter of the transistor Tr is grounded, and the collector thereof is connected to a control power supply via resistors R14 and R11. A voltage-dividing circuit of the resistors R11, R12, and R13, a voltage-dividing circuit of the resistors R11, R12, and R16, and a capacitor C4, and a voltage-dividing circuit of the resistors R11 and R15, and a capacitor C5 are formed between the control power supply and ground terminals.

A target voltage ref1 is obtained from the positive terminal of the capacitor C4, and is supplied to the non-inverting input terminal of the error amplifier 13. A target voltage ref2 is obtained from the positive terminal of the capacitor C5, and is supplied to the non-inverting input terminal of the error amplifier 23.

The microcomputer 24 performs switching of the transistor Tr based on the generated PWM signal to generate predetermined voltages in the voltage-dividing circuit, and the target voltages ref1 and ref2 having a predetermined amount of difference are generated with the corresponding voltage-dividing circuits based on the generated voltages. Other configurations and operations are the same as the configurations and operations of Embodiment 1 described above, and thus descriptions thereof are omitted.

Industrial Applicability

The present invention is applicable to a voltage converter that is configured to boost or drop a voltage in a power supply device installed in a vehicle.

List of Reference Numerals

1 Coil
2,3 FET
4, 5 Diode
7 Step-up PWM signal generation circuit
8 Step-down PWM signal generation circuit
10 Control unit (means for making a voltage larger by a predetermined amount)
11, 21 Comparator
12, 22 Triangular wave generator circuit
13, 23 Error amplifier
C3 Smoothing capacitor

**Claims**

1. A voltage converter that subjects an input voltage to step-down conversion or step-up conversion to obtain a target voltage, and outputs the obtained voltage, the voltage converter comprising:

   a step-down switching element and a step-up switching element that are respectively configured to perform, with PWM control, switching of the input voltage, and switching between the input voltage and a fixed potential with PWM control in order to increase or decrease the input voltage; a step-down PWM signal generation circuit configured to detect a difference between an output voltage obtained by subjecting the input voltage to the step-down conversion and a step-down target voltage, and to generate a PWM signal for use in the PWM control of the step-down switching element based on the detected difference;
   a step-up PWM signal generation circuit configured to detect a difference between an output voltage obtained by subjecting the input voltage to the step-up conversion and a step-up target voltage, and to generate a PWM signal for use in the PWM control of the step-up switching element based on the detected difference; and
   means for making the step-down target voltage, which is a target for the control by the step-down PWM signal generation circuit, larger by a predetermined amount than the step-up target voltage, which is a target for the control by the step-up PWM signal generation circuit.

FIG. 1

FIG. 2

FIG. 3

V

Output

Voltage

ref

Time

%

Step-down
PWN signal

Duty ratio

Step-up PWN signal

Time

Output < ref          Output > ref     Output < ref

FIG. 4A

V

Time          ref2

Voltage

ref1

Time

FIG. 4B

Comparator input

Error amplifier output

time

Comparator output

time

FIG. 4C

Comparator input

Error amplifier output

time

Comparator output

time

FIG. 5

FIG. 6

FIG. 7

Triangular wave 1 ~12

C1 R3

R1 R4 11

Output voltage

ref1 13

Step-up PWN signal

Triangular wave 1 ~22

C2 R5

R2 R6 12

ref2 23

24

Microcomputer

AD

Input voltage —— AD    PWM

R11 R15

R14

R12 ref2

C5

Tr

R16 ref1

R13 C4

FIG. 8

FIG. 9

FIG. 10A

FIG. 10B

FIG. 10C

FIG. 11A

FIG. 11B

FIG. 12A

FIG. 12B

## INTERNATIONAL SEARCH REPORT

| | International application No. |
|---|---|
| | PCT/JP2014/061461 |

A. CLASSIFICATION OF SUBJECT MATTER
*H02M3/155*(2006.01)i

According to International Patent Classification (IPC) or to both national classification and IPC

B. FIELDS SEARCHED

Minimum documentation searched (classification system followed by classification symbols)
H02M3/155

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | CD-ROM of the specification and drawings annexed to the request of Japanese Utility Model Application No. 17025/1993(Laid-open No. 70486/1994) (Toko, Inc.), 30 September 1994 (30.09.1994), paragraphs [0012] to [0013], [0017], [0021]; fig. 1 to 2 (Family: none) | 1 |
| Y | JP 2003-180072 A (Seiko Instruments Inc.), 27 June 2003 (27.06.2003), paragraphs [0022] to [0024]; fig. 1, 5 to 6 & US 2003/0052654 A1    & CN 1407700 A | 1 |

☐  Further documents are listed in the continuation of Box C.        ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 July, 2014 (08.07.14) | 22 July, 2014 (22.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012029362 A
- JP S6218970 A